# EUROPÄISCHE PATENTANMELDUNG

(11) **EP 2 362 104 A1**
(43) Veröffentlichungstag der Anmeldung: **31.08.2011**
(21) Anmeldenummer: 11153768.4
(22) Anmeldetag: 09.02.2011
(51) Int. Cl.: F16B 7/14

(54) **Klemmelement**

(30) Priorität: 18.02.2010 DE 202010000222 U
(71) Anmelder: Patech GmbH, 94436 Simbach (DE)
(72) Erfinder: Beer, Alfred, 94405, Niederhöcking (DE); Schall, Klaus, 94436, Simbach (DE)
(74) Vertreter: Gustorf, Gerhard

(57) **Zusammenfassung**

Das Klemmelement (24) dient zum lösbaren Verbinden von zwei parallel nebeneinander liegenden Drähten oder Stangen (16, 20), insbesondere in Gitterwänden von Steinkörben. Es hat eine Überbrückungsplatte (26) mit zwei parallel nebeneinanderliegenden Aufnahmerinnen (32) für jeweils einen Draht oder eine Stange sowie ein den Aufnahmerinnen (32) gegenüberliegendes und über einen Bolzen (38) verstellbares Klemmteil. Dieses besteht aus einem länglichen Knebel (34), der mit dem freien Ende des Bolzens (38) unverlierbar verbunden ist und dessen Breite dem Innenabstand der beiden Aufnahmerinnen (32) entspricht. Der Knebel (34) ist aus einer parallel zu den beiden Aufnahmerinnen (32) liegenden Einführstellung um 90° in eine Klemmstellung schwenkbar, in der er die beiden Drähte oder Stangen (16, 20) in ihre Aufnahmerinnen (32) drückt. Dabei ist es vorteilhaft, wenn Nockenführungselemente (46) vorgesehen sind, die nach einer Teildrehung des Bolzens (38) aus einer Ausgangsstellung in eine Klemmstellung den Knebel (34) kraftschlüssig gegen die Drähte oder Stangen (16, 20) und diese in ihre Aufnahmerinnen (32) drücken.

## Beschreibung

Die Erfindung betrifft ein Klemmelement zum lösbaren Verbinden von zwei parallel nebeneinander liegenden Drähten oder Stangen, insbesondere in Gitterwänden von Steinkörben oder dergleichen, umfassend eine Überbrückungsplatte mit zwei parallel nebeneinanderliegenden Aufnahmerinnen für jeweils einen Draht oder eine Stange sowie ein den Aufnahmerinnen gegenüberliegendes und über einen Bolzen verstellbares Klemmteil.

Zum Verbinden von jeweils zwei Drähten oder Stangen in Gitterwänden von Steinkörben werden bisher Klemmelemente eingesetzt, die aus drei losen Einzelteilen zusammengesetzt sind, nämlich einer Überbrückungsplatte, einem ebenfalls als Platte ausgebildeten Klemmteil und einem als Schraube ausgebildeten Bolzen. Bei der Montage wird dann so vorgegangen, dass zunächst das plattenförmige Klemmteil von Hand an die beiden miteinander zu verbindenden Drähte gelegt und festgehalten werden muss, um anschließend auch die gegenüberliegende Überbrückungsplatte anzulegen und festzuhalten; in dieser Stellung ist dann der als Schraube ausgebildete Bolzen einzusetzen, dessen Gewindeschaft in eine Gewindebohrung der Überbrückungsplatte eingreift. Abschließend wird die Schraube festgezogen, wodurch dann die beiden Drähte sicher miteinander verbunden sind.

Ein Klemmelement der eingangs erläuterten Bauart zum Befestigen von Rohrheizkörpem an einer Wand ist Gegenstand des Gebrauchsmusters DE 20 2008 008 050. Auch dieses besteht aus drei Bauteilen, wobei der mit seinem Gewindeende in ein Anschlusselement einschraubbare Bolzen am Ende des Einschraubvorgangs über eine Verzahnung in eine formschlüssige Verbindung mit dem Klemmteil kommt.

Aus US 4 224 721 ist eine Vorrichtung zum Verbinden von zwei parallelen, stab- oder rohrförmigen Elementen bekannt, die hierzu mit Schnappeingriff in zwei nebeneinander liegende Aufnahmerinnen einer Überbrückungsplatte eingedrückt werden. Von dieser steht ein Bolzen ab, der als Drehachse für einen Knebel dient, der nach einer Vierteldrehung die beiden stab- oder rohrförmigen Elemente in ihren Aufnahmerinnen einschließt.

Der Erfindung liegt die Aufgabe zugrunde, ein Klemmelement zur Verfügung zu stellen, das innerhalb kürzester Zeit und mit wenigen Handgriffen eine feste Klemmverbindung zwischen zwei Drähten oder Stangen herstellt.

Bei einem Klemmelement der eingangs umrissenen Bauart wird diese Aufgabe erfindungsgemäß durch die im Patentanspruch 1 angegebenen kennzeichnenden Merkmale gelöst.

Diese Lösung hat gegenüber dem Stand der Technik den Vorteil, dass ein aus nur zwei Elementen bestehendes Klemmelement zur Verfügung steht, die eine unverlierbare Einheit bilden. Dadurch, dass der Bolzen fest mit dem Knebel verbunden ist, lässt sich das Klemmelement mit einem einfachen Handgriff in seine Einsatzstellung bringen; es genügt dann eine Vierteldrehung des Bolzens mit dem daran befestigten Knebel, um die beiden Drähte oder Stangen fest miteinander zu verbinden. Ein umständliches Einschrauben einer Schraube entfällt.

Weitere Merkmale und Vorteile der Erfindung ergeben sich aus den abhängigen Ansprüchen und aus der nachstehenden Beschreibung von zwei Ausführungsbeispielen, die im Vergleich zum Stand der Technik in der Zeichnung dargestellt sind. Es zeigen:
Figur 1 die Ansicht eines Steinkorbs üblicher Bauart, wobei mit den eingezeichneten Kreisen II die zu verbindenden Stellen beispielhaft angedeutet sind,
Figur 2 eine vergrößerte Ausschnittsansicht des Steinkorbes der Figur 1 mit im Bereich der Kreise II gezeigten Klemmelementen des Standes der Technik,
Figur 3 das in Figur 2 gezeigte, bekannte Klemmelement in zwei unterschiedlichen Einsatzstellungen,
Figur 4 die perspektivische Ansicht eines Klemmelementes der Erfindung,
Figur 5 die Ansicht des Klemmelementes der Figur 4 beim Einsatz zwischen zwei zu verbindende Drähte,
Figur 6 das Klemmelement der Figur 5 in der Klemmstellung,
Figur 7 eine Draufsicht auf den Knebel des Klemmelementes in der Ebene VII-VII der Figur 6.
Figur 8 einen der Figur 6 entsprechenden Querschnitt durch eine Variante der Erfindung,
Figur 9 eine Unteransicht des Klemmelementes der Figur 8 und
Figur 10 eine Seitenansicht des Klemmelementes der Figuren 8 und 9.

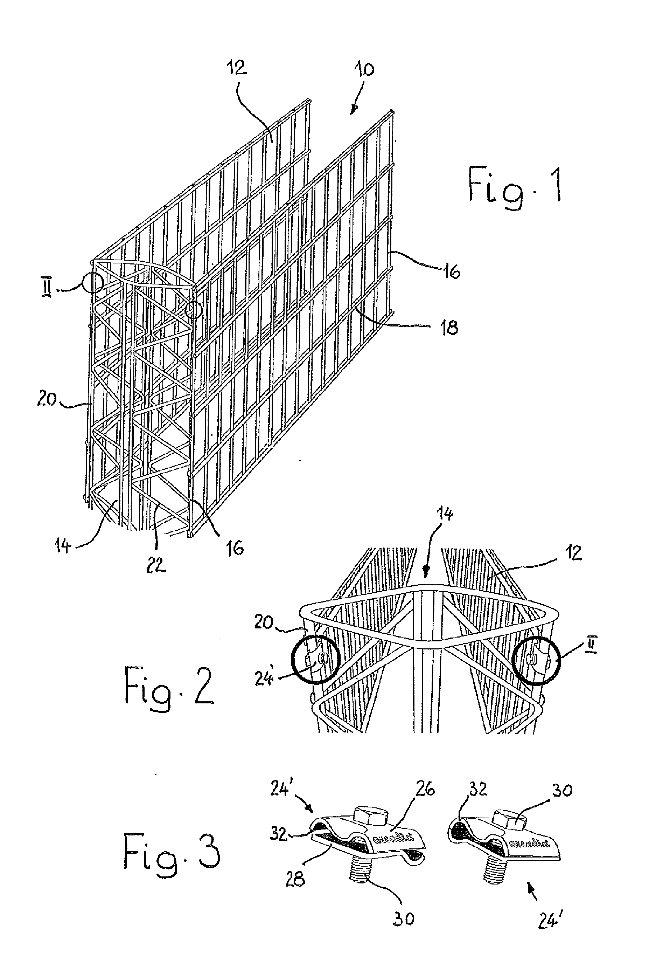

Figur 1 zeigt in perspektivischer Darstellung einen bekannten Steinkorb 10. Der Innenraum des Steinkorbes 10, der mit Steinen wie Granit, Basalt oder Zierkies befüllt werden kann, wird begrenzt durch zwei parallel zueinander angeordnete Gittermatten 12 und zwei seitlich begrenzende, gitterförmige Wandsäulen 14 (in Figur 1 ist nur eine Wandsäule 14 dargestellt).

Jede Gittermatte 12 setzt sich aus einer Reihe vertikaler Drähte 16 zusammen, die durch horizontale Drähte 18 miteinander verbunden sind. Auch die seitliche Wandsäule 14 ist aus Draht gefertigt und hat sowohl im mittleren Bereich als auch an den beiden Seitenkanten vertikal verlaufende Drähte 20, die im gezeigten Beispiel durch zickzackartige Drähte 22 miteinander verbunden sind.

Um die Wandsäule 14 fest mit den beiden Gittermatten 12 zu verbinden, werden nach dem Stand der Technik Klemmelemente 24' eingesetzt, die beispielsweise in den kreisförmig eingezeichneten Bereichen II positioniert sind. Diese bestehen, wie Figur 3 zeigt, aus einer Überbrückungsplatte 26 und einer gegenüberliegenden Klemmplatte 28 sowie einer Schraube 30.

Um nun zwei Drähte 16 und 20, die die nebeneinanderliegenden Kanten von Gittermatte 12 und Wandsäule 14 bilden, miteinander zu verbinden, wird zunächst die Überbrückungsplatte 26 gegen diese beiden Drähte 16 und 20 gelegt, welche dabei in zwei parallel nebeneinanderliegende Aufnahmerinnen 32 der Überbrückungsplatte 26 eingreifen. Anschließend wird von der gegenüberliegenden Seite die Klemmplatte 28 angelegt und in dieser Stellung festgehalten, damit die Schraube 30 in eine Gewindebohrung der Klemmplatte 28 eingeschraubt werden kann.

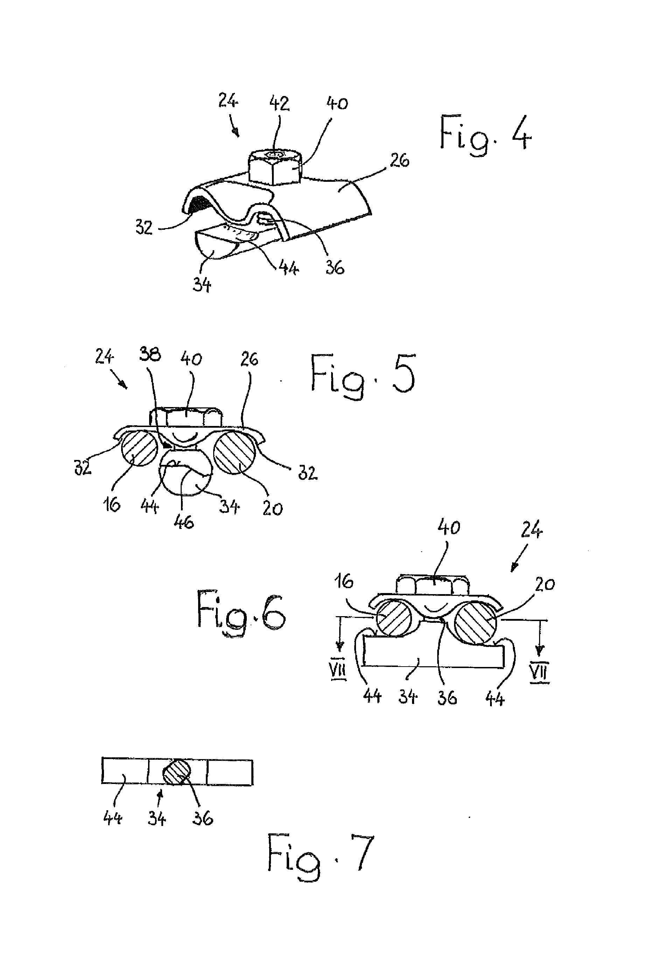

Die Figuren 4 bis 7 zeigen ein erfindungsgemäß ausgebildete Klemmelement 24, dessen Überbrückungsplatte 26 wie die Überbrückungsplatte 26 der Figur 3 ausgebildet ist. Auch die Überbrückungsplatte 26 hat hier zwei parallel nebeneinanderliegende Aufnahmerinnen 32 für jeweils einen Draht 16 bzw. 20, die unterschiedliche Stärke haben können (vgl. Figuren 5 und 6). Wie beim Stand der Technik besteht auch hier die Überbrückungsplatte 26 aus einem Blechformteil.

Gemäß der Erfindung ist bei diesem Klemmelement 24 keine gegenüberliegende Klemmplatte vorgesehen, sondern ein als länglicher Knebel 34 ausgebildetes Klemmteil, dessen Breite gemäß Figur 5 etwa dem Innenabstand der beiden Aufnahmerinnen 32 und damit etwa dem lichten Abstand zwischen den beiden Drähten 16 und 20 entspricht.

Der Knebel 34 ist hier drehfest mit dem Schaft 36 eines Bolzens 38 verbunden. Der Schaft 36 des Bolzens 38 ist daher nicht, wie bei der Schraube 30 des Standes der Technik, relativ zum Knebel 34 verstellbar. Der Schaft 36 des Bolzens 38 greift durch eine nicht gezeigte Bohrung durch die Überbrückungsplatte 26 und hat einen auf der Oberseite der Überbrückungsplatte 26 liegenden Verstellkopf 40, der als Sechskant für den Angriff eines Werkzeugs ausgebildet sein kann. Alternativ ist auch möglich, den Verstellkopf 40 rund auszubilden und/oder mit einem Innensechskant 42 für den Angriff eines Werkzeugs auszubilden.

Der Knebel 34 hat zu beiden Seiten des Schaftes 36 auf seiner der Überbrückungsplatte 26 zugewandten Seite jeweils eine Aussparung 44, die als Anlagefläche für den Draht 16 bzw. 20 dient (vgl. Figur 6). Aus Figur 6 geht weiter hervor, dass die beiden Aussparungen 44 unterschiedliche Tiefen haben können, um gleichermaßen einen verhältnismäßig dünnen Draht 16 und einen dickeren Draht 20 miteinander zu verbinden.

Die Figuren 4 und 5 zeigen die Einführstellung des Klemmelementes 24, bei der der Knebel 34 parallel zwischen den beiden Aufnahmerinnen 32 liegt. In dieser Einführstellung wird, die Figur 5 weiter zeigt, der Knebel 34 zwischen zwei Drähte 16 und 20 eingeführt, um dann gemäß Figur 6 mittels des Verstellkopfes 40 um 90° in seine Klemmstellung geschwenkt zu werden. Aus Figur 6 geht hervor, dass in der Klemmstellung des Knebels 34 zwischen jeder der beiden Aufnahmerinnen 32 und der gegenüberliegenden Aussparung 44 ein etwa teilkreisförmiger Aufnahmeraum für den jeweiligen Draht 16, 20 begrenzt wird. Aufgrund dieser Bemessung muss beim Drehen des Knebels 34 aus seiner Einführstellung gemäß Figur 5 in die Klemmstellung der Figur 6 zwischen dem festzuklemmenden Draht und einer als Nockenbahn 46 wirkenden Schrägfläche innerhalb der Aussparung 46 ein Reibungswiderstand überwunden werden, der in der Klemmstellung dafür sorgt, dass der Knebel 34 die beiden Drähte oder Stangen 16, 20 fest in ihre Aufnahmerinnen 32 drückt, so dass das Klemmelement 24 in der Klemmstellung sicher gehalten wird.

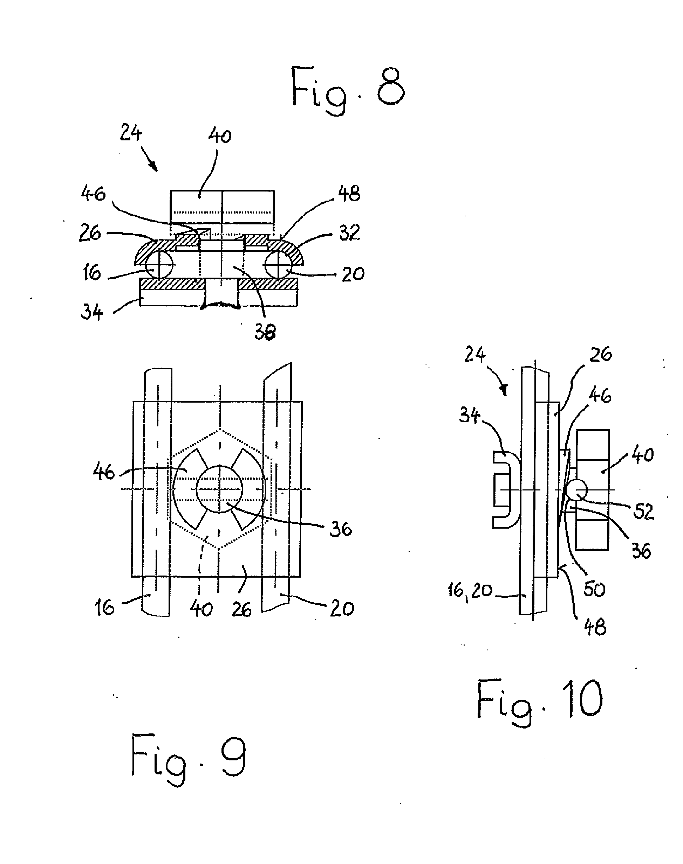

In der in den Figuren 8 bis 10 dargestellten Variante ist die Nockenbahn 46 nicht am Knebel 34 ausgebildet, sondern auf der zum Verstellkopf 40 des Bolzens 38 weisenden Oberfläche 48 der Überbrückungsplatte 26. Als Nockenbahn 46 sind hier zwei diametral gegenüberliegende, etwa viertelkreisförmige, ansteigende Schrägflächen vorgesehen, die aus der Überbrückungsplatte 26 ausgedrückt sind und auf die beim Drehen des Bolzens 38 um 90° zwei nockenartige Vorsprünge 50 auflaufen, die von der Unterseite des Verstellkopfes 40 des Bolzens 38 abstehen. Die Vorsprünge 50 werden hier durch einen Stift 52 gebildet, der in eine Radialbohrung des Schaftes 36 des Bolzens 38 eingesetzt ist. Beim Verdrehen des Bolzens 38 um 90° wird der als U-förmiges Blechteil ausgebildete Knebel 34 mit seiner eben ausgebildeten Oberfläche fest gegen die beiden Drähte oder Stangen 16, 20 gedrückt, wodurch diese in ihren Aufnahmerinnen 32 festgeklemmt werden.

Bei dieser Ausführungsvariante kann der Knebel 34 frei drehbar am Bolzen 38 angebracht sein, wozu gemäß Figur 8 das Schaftende des Bolzens 38 verstemmt ist. Damit kann der Knebel 34 nach dem Einführen zwischen die beiden Drähte oder Stangen von Hand um 90° gedreht werden, worauf dann die Klemmung über die Nockenbahn 46 erfolgt. Das hat den Vorteil, dass der Knebel 34 keine Reib- und Scherbewegungen an den Oberflächen der Drähte oder Stangen 16, 20 ausführt, wodurch diese beschädigt werden könnten.

## Patentansprüche

1. Klemmelement zum lösbaren Verbinden von zwei parallel nebeneinander liegenden Drähten oder Stangen, insbesondere in Gitterwänden von Steinkörben oder dergleichen, umfassend eine Überbrückungsplatte (26) mit zwei parallel nebeneinanderliegenden Aufnahmerinnen (32) für jeweils einen Draht oder eine Stange sowie ein den Aufnahmerinnen (32) gegenüberliegendes und über einen Bolzen (38) verstellbares Klemmteil, **dadurch gekennzeichnet, dass** das Klemmteil aus einem länglichen Knebel (34) besteht, der mit dem freien Ende des Bolzens (38) unverlierbar verbunden ist und dessen Breite dem Innenabstand der beiden Aufnahmerinnen (32) entspricht, wobei der Knebel (34) aus einer parallel zu den beiden Aufnahmerinnen (32) liegenden Einführstellung um 90° in eine Klemmstellung schwenkbar ist, in der er die beiden Drähte oder Stangen (16, 20) in ihre Aufnahmerinnen (32) drückt.

2. Klemmelement nach Anspruch 1, **dadurch gekennzeichnet, dass** Nockenführungselemente (46) vorgesehen sind, die nach einer Teildrehung des Bolzens (38) aus einer Ausgangsstellung in eine Klemmstellung den Knebel (34) kraftschlüssig gegen die Drähte oder Stangen (16, 20) und diese in ihre Aufnahmerinnen (32) drücken.

3. Klemmelement nach Anspruch 1 oder 2, **dadurch gekennzeichnet, dass** der Bolzen (38) zum Drehen des Knebels (34) einen Verstellkopf (40) für den Angriff eines Werkzeugs hat.

4. Klemmelement nach Anspruch 3, **dadurch gekennzeichnet, dass** die Nockenführungselemente als Nockenbahnen (46) auf der zum Verstellkopf (40) des Bolzens (38) weisenden Oberfläche (48) der Überbrückungsplatte (26) ausgebildet sind, denen jeweils ein nockenartiger Vorsprung (50) auf der gegenüberliegenden Seite des Verstellkopfes (40) zugeordnet ist.

5. Klemmelement nach Anspruch 4, **dadurch gekennzeichnet, dass** die Nockenbahnen (46) aus zwei diametral gegenüberliegenden, etwa viertelkreisförmigen, ansteigenden Schrägflächen bestehen, denen je ein nockenartiger Vorsprung (50) zugeordnet ist.

6. Klemmelement nach Anspruch 5, **dadurch gekennzeichnet, dass** die nockenartigen Vorsprünge (50) durch einen Stift (52) gebildet werden, der den Schaft (36) des Bolzens (38) radial durchquert.

7. Klemmelement nach einem der vorhergehenden Ansprüche, **dadurch gekennzeichnet, dass** der Knebel (34) frei drehbar am freien Ende des Bolzens (38) befestigt ist.

8. Klemmelement nach Anspruch 2 oder 3, **dadurch gekennzeichnet, dass** die Nockenführungselemente als Nockenbahnen (46) an dem Knebel (34) ausgebildet sind, der hierzu auf seiner der Überbrückungsplatte (26) zugewandten Seite zu beiden Seiten des Schaftes (36) des Bolzens (38) jeweils eine Aussparung (44) hat, die eine rampenförmig, ansteigende Schrägfläche für die Anlage an den Draht oder die Stange (16, 20) bildet.

9. Klemmelement nach Anspruch 8, **dadurch gekennzeichnet, dass** die Aussparungen (44) unterschiedliche Tiefen haben.

10. Klemmelement nach Anspruch 8 oder 9, **dadurch gekennzeichnet, dass** in der Klemmstellung des Knebels (34) zwischen jeder der beiden Aufnahmerinnen (32) und der gegenüberliegenden Aussparung (44) ein im Querschnitt teilkreisförmiger Aufnahmeraum für einen Draht oder eine Stange (16, 20) begrenzt wird.
